# EUROPÄISCHE PATENTSCHRIFT

(11) **EP 1 150 083 B1**
(45) Veröffentlichungstag und Bekanntmachung des Hinweises auf die Patenterteilung: **23.06.2004**
(21) Anmeldenummer: 00108815.2
(22) Anmeldetag: 26.04.2000
(51) Int. Cl.: F26B 9/10, F26B 23/00, F26B 3/28

(54) **Verfahren und Vorrichtung zur Trocknung von Feuchtgut**
Process and apparatus for drying moist material
Procédé et dispositif de séchage de matériau humide

(43) Veröffentlichungstag der Anmeldung: 31.10.2001
(73) Patentinhaber: Kraus, Karl, 79777 Ühlingen-Birkendorf (DE); Kraus, Oliver, 79777 Ühlingen-Birkendorf (DE)
(72) Erfinder: Kraus, Karl, 79777 Ühlingen-Birkendorf (DE); Kraus, Oliver, 79777 Ühlingen-Birkendorf (DE)
(74) Vertreter: Hössle, Markus, Dipl.-Phys.

(56) Entgegenhaltungen:
- WO-A-00/14186
- CA-A- 1 162 735
- DE-A- 4 314 645
- DE-A- 4 315 321
- DE-A- 19 508 400
- DE-A- 19 547 062
- DE-A- 19 654 093
- DE-A- 19 704 201
- DE-C- 527 363
- DE-U- 9 305 644
- DE-U- 29 723 757
- US-A- 4 492 039
- US-A- 5 065 528
- EKECHUKWU O V ET AL: "Review of solar-energy drying systems II: an overview of solar drying technology" ENERGY CONVERSION AND MANAGEMENT,GB,ELSEVIER SCIENCE PUBLISHERS, OXFORD, Bd. 40, Nr. 6, 1. April 1999 (1999-04-01), Seiten 615-655, XP004144353 ISSN: 0196-8904
- LUBOSCHIK U: "SOLRE SCHLAMMTROCKNUNG NACH DEM IST VERFAHREN. -SEIT DREI JAHREN ERPROBUNG IN DER PRAXIS.- SOLAR SLUDGE DRYING BASED ON THE IST PROCESS. - PROCESS THREE YEARS ON TEST IN THE PRACTICE.-" AT - AUFBEREITUNGS TECHNIK - MINERAL PROCESSING,DE,AT VERLAG FUER AUFBEREITUNGS, WIESBADEN, Bd. 39, Nr. 1, 1998, Seiten 25-28, XP000730396 ISSN: 1434-9302
- "Wie funktioniert das?", Seiten 460 und 461, 3. Aufl. Bibliographisches Institut, 1986; Auszug aus dem Betriebstagebuch der Kläranlage Küssaberg vom August 2001; "Abwasser in den europäischen Staaten", Statistik kurz gefaßt, Eurostat, Seiten 1 - 7, 14/2001.

## Beschreibung

Die Erfindung betrifft ein Verfahren und eine Vorrichtung zur Trocknung von Klärschlamm, in einer Kläranlage gemäß dem Oberbegriff des Patentanspruchs 1 bzw. gemäß dem Oberbegriff der Patentanspruchs 8.

Klärschlamm fällt bei jeder Kläranlage in beträchtlichen Mengen an. Dieser besteht im wesentlichen aus Wasser und Feststoffen, wobei der Wasseranteil ca. 95 bis 98 % beträgt. Neben verwertbaren Stoffen sind im Klärschlamm auch Schwermetalle und andere umweltbelastende Stoffe enthalten. Ein Teil des Klärschlammes wird in der Landwirtschaft als Dünger verwendet. Wegen der damit verbundenen Bodenbelastung und der Gefährdung des Grundwassers ist eine solche Verwertung jedoch problematisch und wurde in einigen Gegenden eingeschränkt. In Zukunft wird die Verwertung des Klärschlammes in der Landwirtschaft deshalb immer schwieriger werden. Ein anderer Teil des Klärschlammes wird über Rekultivierung, Kompostierung und Deponierung entsorgt. Der verbleibende Teil wird verbrannt. Getrockneter Klärschlamm hat einen Heizwert von 8 bis 10 MJ/kg. Die letztgenannte Entsorgung bzw. Verwertung wird in Zukunft immer mehr an Bedeutung gewinnen. Dieses setzt aber voraus, daß der Klärschlamm ausreichend getrocknet ist.

Aus der DE 40 16 100 A1 ist ein Verfahren und eine Vorrichtung zum Trocknen von Klärschlamm in einem Behälter bekannt, wobei der Klärschlamm dem Behälter an dessen Oberseite kontinuierlich oder intermittierend zugeführt wird. Der Klärschlamm durchläuft den Behälter in Form einer Säule mit stabiler Schichtung und wird dem Behälter an der Unterseite getrocknet entnommen. Zum Trocknen wird Trocknungsluft im Gegenstrom von unten nach oben durch die Klärschlammsäule hindurch geleitet. Das Verfahren wird bei einer Temperatur von ca. 80 °C betrieben, wobei die Trocknungsluft auf ca. 60 °C erhitzt wird. Eine solche thermische Trocknung, bei der der Klärschlamm mit hohem Energie- und Maschinenaufwand getrocknet wird, ist für kleinere Kläranlagen nicht wirtschaftlich.

Aus der DE 43 15 321 C2 ist die Trocknung von Schlämmen mit Hilfe von Solarstrahlung bekannt. Die Schlämme werden in einem Absetzbecken, das in einem Gebäude mit transparenten Gebäudehüllen vorgesehen ist, getrocknet. Am Absetzbecken sind Anschwämm- und Trocknungsflächen vorgesehen. Daraus ergibt sich ein hoher Flächenbedarf, der oft nicht gedeckt werden kann. Die zum Trocknen dienende Zuluft soll im wesentlichen mit Sonnenenergie vorgewärmt werden. Im Gebäude ist eine Wende- und Transporteinrichtung für die Schlämme bzw. das Trockengut vorgesehen. Beim Wenden wird der Schlamm gleichzeitig weitertransportiert, so daß der Schlamm dabei nur kurzzeitig belüftet wird. Die Trocknung der Schlämme dauert mit diesem Verfahren sehr lange und ist stark von der Witterung abhängig. Eine kontinuierliche Trocknung und ein garantierter Trockensubstanzwert innerhalb einer bestimmten Zeit kann deshalb nicht gewährleistet werden. Um getrockneten Klärschlamm energiebringend verbrennen zu können, muß dieser einen Trockensubstanzgehalt von ca. 80 % aufweisen. Ohne zusätzliche Erwärmung der Trocknungsluft mit Fremdenergie kann ein solcher Wert mit den beschriebenen Verfahren nur in den Hochsommermonaten erreicht werden.

Aus der DE 196 54 093 A1 ist ein Verfahren zur Niedertemperaturtrocknung von Feuchtgut in einer Trocknungsstufe mittels Trocknungsluft bekannt. Als Trocknungsluft wird Außenluft, die in Abhängigkeit von der Witterung, insbesondere von Temperatur und/oder Nässe gegebenenfalls erwärmt wird, Umluft des Trocknungssystems oder eine Mischung aus beiden eingesetzt. Der Umluftanteil der Trocknungsluft wird nach Durchlaufen der Trocknungstufe in einer Kühlstufe abgekühlt sowie teilentfeuchtet und danach mittels der Kompressionswärme der Kühlstufe wieder erwärmt. Zum Bereitstellen der benötigten elektrischen Energie ist ein Blockheizkraftwerk vorgesehen, dessen Abwärme zumindest teilweise zur Erwärmung der Trocknungsluft eingesetzt wird. Bei schlechten Witterungsbedingungen arbeitet das Verfahren im wesentlichen nach dem energieintensiven Umluftprinzip, wobei das Blockheizkraftwerk als Energie- bzw. Wärmequelle benötigt wird.

Demgegenüber werden erfindungsgemäß ein Verfahren zur Trocknung von Feuchtgut mit den Merkmalen des Anspruches 1 und eine Vorrichtung mit den Merkmalen des Anspruches 8 vorgeschlagen. Demnach wird Abwasser bzw. Restwasser als Wärmequelle zur Erwärmung der Trocknungsluft verwendet. Diese leicht zugängliche und in weiten Bereichen vorhandene Wärmequelle ermöglicht es, den Energieaufwand beim Erwärmen der Trocknungsluft zu reduzieren. Das erfindungsgemäße Verfahren eignet sich insbesondere für die Niedertemperaturtrocknung von Feuchtgut. Abwasser bzw. Restwasser ist mit geringem Aufwand und technisch einfachen Mitteln faßbar. Kostspielige Bohrungen oder aufwendige Erdkollektoren, die bei einer Nutzung anderer Wärmequellen wie beispielsweise Erdwärme erforderlich sind, werden nicht benötigt. Daraus ergeben sich günstige Investitionskosten. Die Temperatur des Abwassers ist selbst im Winter so hoch, daß es als Wärmequelle für das erfindungsgemäße Verfahren genutzt werden kann. Außerdem ist die Temperatur des Abwassers im wesentlichen konstant, so daß ein gleichbleibend hoher Wirkungsgrad bei der Wärmegewinnung erreicht wird. Bei Kläranlagen bewirkt der Wärmeentzug eine gewünschte Abkühlung des Abwassers gegenüber dem Vorfluter, was zu einer Qualitätserhöhung des Wassers des Vorfluters beiträgt.

In einer bevorzugten Ausführungsform der Erfindung wird die Wärme aus dem Abwasser mit Hilfe eines Wärmetauschers gewonnen. Dieses Verfahren eignet sich besonders bei Industriekläranlagen, z.B. von Brauereien oder Papierfabriken, da dort die Abwassertemperaturen wesentlich höher als die Temperatur von Haushaltsabwässern ist. Bei ausreichend hohen Abwassertemperaturen kann die Trocknungsluft somit unmittelbar über das Abwasser erwärmt werden.

In einer besonders bevorzugten Ausführungsform der Erfindung wird die Wärme des Abwassers über eine Wärmepumpe gewonnen. Ein Temperaturgefälle zwischen Wärmequelle und zu erwärmender Luft ist, anders als bei Verwendung eines Wärmetauschers, keine Voraussetzung für den Betrieb einer Wärmepumpe. Durch die Verwendung von Wärmepumpen sind auch Wärmequellen im Niedertemperaturbereich ab ca. 1 °C nutzbar. Dadurch können mit dem erfindungsgemäßen Verfahren auch kältere Abwässer wie Haushaltsabwässer oder über lange Strecken transportierte Abwässer als Wärmequelle genutzt werden. Die Wärmequelle Abwasser ist für den Betrieb einer Wärmepumpe besonders gut geeignet. Das erfindungsgemäße Verfahren kann zweckmäßig für die Trocknung von Klärschlamm in städtischen/kommunalen Kläranlagen eingesetzt werden.

In einer vorteilhaften Ausgestaltung der Erfindung wird als Trocknungsluft Außenluft verwendet, wobei die Außenluft in Abhängigkeit von deren Temperatur und Feuchtigkeit entsprechend erwärmt wird. Bei der Niedertemperaturtrocknung von Feuchtgut reichen schon relativ geringe Temperaturen der Trocknungsluft aus, um eine Trocknung zu gewährleisten. Je nach Witterung bedarf es in günstigen Fällen zeitweise nur einer geringen oder überhaupt keiner weiteren Erwärmung der Außenluft. Bei schlechter Witterung ist durch die Abwasserwärme eine energiegünstige Erwärmung der Trocknungsluft sichergestellt.

Bei einer zweckmäßigen Ausgestaltung der Erfindung wird zusätzlich Sonnenstrahlung zum Trocknen des Feuchtgutes und/oder zum Erwärmen der Trocknungsluft verwendet. Damit wird eine zusätzliche Energieeinsparung erreicht.

In einer bevorzugten Ausgestaltung der Erfindung wird Wärme zum Erwärmen der Trocknungsluft in Becken bzw. Speichertanks in Form von Flüssigkeitswärme gespeichert. Auf diese Art und Weise können geringe Abwasserdurchflußmengen, wie sie z.B. in der Nacht auftreten, oder ein erhöhter Wärmebedarf ausgeglichen werden, indem Wärmepumpe bzw. Wärmetauscher mit der Flüssigkeit aus dem Speichertank betrieben werden.

In einer bevorzugten Ausführungsform der Erfindung wird die Trocknungsluft zum Trocknen des Feuchtgutes durch das Feuchtgut hindurch geleitet. Dadurch wird eine schnellere und gleichmäßige Trocknung über die gesamte Schichtstärke des Feuchtgutes erreicht.

In besonders vorteilhafter Ausgestaltung sind zum Erwärmen der Trocknungsluft Mittel zum Gewinnen der Wärme von Abwasser vorgesehen. Dadurch wird eine energiegünstige Erwärmung der Trocknungsluft erreicht.

In einer Ausgestaltung der Erfindung sind die Mittel zum Gewinnen der Wärme ein Wärmetauscher und/oder eine Wärmepumpe.

In einer bevorzugten Ausführungsform der Erfindung ist das Trocknungsbett ein Lochblechboden. Dadurch kann dem Feuchtgut vorteilhaft Trocknungsluft von unten zugeführt werden und Flüssigkeit bzw. getrocknetes Gut kann durch den Boden hindurch treten.

In einer Ausgestaltung der Erfindung ist die Vorrichtung modulartig aus mehreren Trocknungseinheiten aufgebaut. Eine Erweiterung und/oder Anpassung der Trocknungsvorrichtung an unterschiedliche Einsatzbedingungen somit leicht durchzuführen.

In weiterer vorteilhafter Ausgestaltung der Erfindung ist die Vorrichtung von einer doppelwandigen Umhüllung umgeben, die vorzugsweise zumindest teilweise transparent ausgebildet ist. Dadurch erfolgt in dem Zwischenraum der doppelwandigen Umhüllung eine Vortrocknung der Trocknungsluft.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in den Zeichnungen schematisch dargestellt und wird im folgenden unter Bezugnahme auf die Zeichnungen näher erläutert.
- Figur 1: zeigt eine Seitenansicht einer bevorzugten Ausführungsform der Erfindung.
- Figur 2: zeigt eine Draufsicht auf die Ausführungsform der Figur 1.
- Figur 3: zeigt einen Querschnitt durch die Ausführungsform der Figur 1 entlang der Schnittlinie III-III.

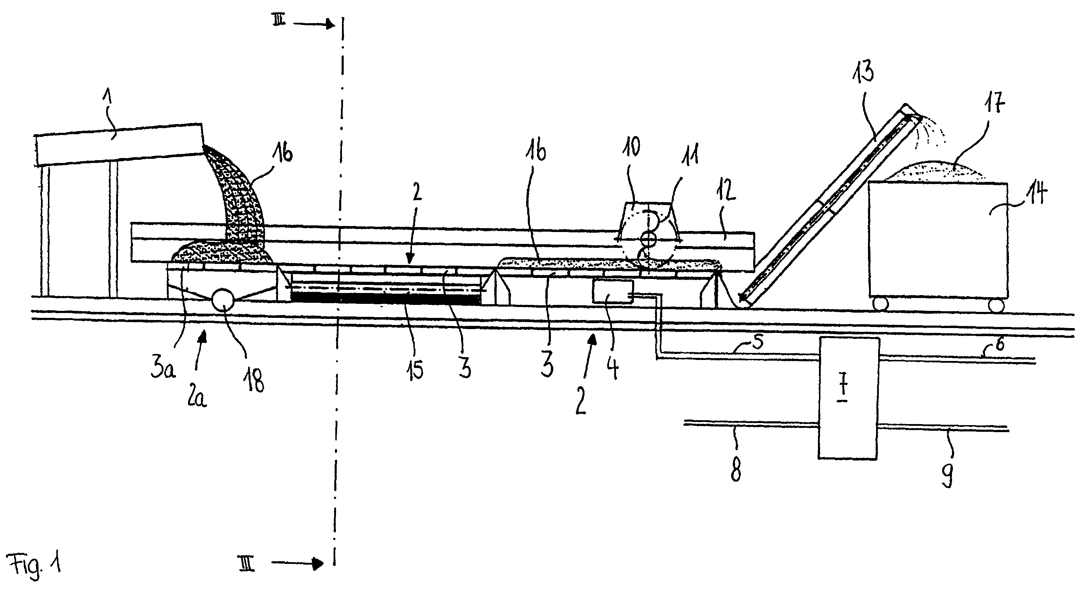

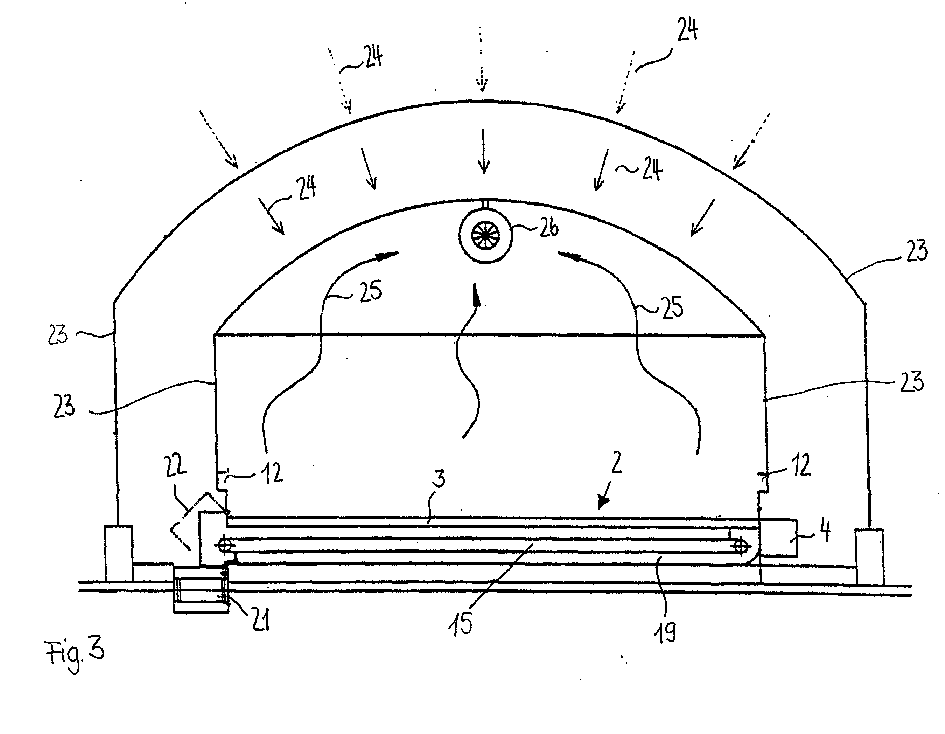

Figur 1 zeigt eine schematische Seitenansicht einer bevorzugten Ausführungsform der Erfindung. Die erfindungsgemäße Vorrichtung ist gewöhnlich in einem (nicht dargestellten) Gebäude untergebracht oder durch eine in Figur 3 gezeigte Umhüllung 23, die z.B. nach Art eines Zeltes ausgeführt sein kann, gegen einen unkontrollierten Lufteintritt bzw.austritt gegenüber der Umgebung abgeschirmt. Bezugszeichen 1 bezeichnet eine Zuführeinrichtung, über die Feuchtgut 16 mindestens einer Trocknungsstufe zugeführt wird. Die Trocknungsstufen werden durch Trocknungseinheiten 2, 2a gebildet. Beim Trocknen durchläuft das Feuchtgut 16 die Trocknungseinheiten 2, 2a und das Trockengut 17 wird mittels einer Fördereinrichtung 13 in einem Behälter 14 gesammelt.

Die erfindungsgemäße Vorrichtung ist aus den Trocknungseinheiten 2, 2a modulartig aufgebaut. Eine Erweiterung der Vorrichtung ist daher ohne großen Umbau jederzeit möglich. Diese Bauweise ermöglicht es außerdem, daß jede einzelne Trocknungseinheit 2 für sich mit Trocknungsluft versehen und einzeln gesteuert werden kann. Eine Anpassung der Vorrichtung an die zu trocknenden Mengen Feuchtgut bzw. den gewünschten Trocknungsgrad ist durch den modulartigen Aufbau leicht zu erreichen.

Die Zuführeinrichtung 1 für das Feuchtgut 16 kann als eine Vorentwässerungsstufe ausgeführt sein. Das Feuchtgut 16 kann aber auch an einer anderen Stelle, beispielsweise durch eine Kammerfilterpresse, Siebbandpresse oder Zentrifuge, vorentwässert werden. Über die Zuführeinrichtung 1 wird das Feuchtgut 16 der Trocknungseinheit 2a über deren gesamte Breite zugeführt. Mit einer Misch- und Ausräumeinrichtung 10 wird das Feuchtgut 16 gleichmäßig auf einem Trocknungsbett 3a der ersten Trocknungseinheit 2a verteilt.

Die Trocknungseinheit 2a dient zum Entwässern des Feuchtgutes 16. Dazu sind im Trocknungsbett 3a Wasseraustrittsöffnungen angebracht. Die Trocknungseinheit 2a ist für 8 % bis 10 % vorentwässertes Feuchtgut 16 vorgesehen. Das Feuchtgut wird durch die Schwerkraft entwässert und das Tropfwasser wird über eine Leitung 18 einer Kläranlage zugeführt. Bei ca. 15 % vorentwässertem Feuchtgut kann auf die Trocknungseinheit 2a verzichtet werden. Wenn das Feuchtgut 16 tropftrocken ist, wird es mit der Misch- und Ausräumeinrichtung 10 auf die zweite Trocknungseinheit 2 transportiert und auf deren Trockenbett 3 gleichmäßig verteilt.

Die Trocknungseinheit 2 dient zum Trocknen des Feuchtgutes 16 mit Hilfe von Trocknungsluft. Zu diesem Zweck ist an der Trocknungseinheit 2 eine Gebläseeinrichtung 4 mit Zuleitungen 5, 6 zur Erwärmung der Trocknungsluft vorgesehen. Das Trocknungsbett 3 der Trocknungseinheit 2 ist zweckmäßigerweise luftdurchlässig ausgestaltet. Dazu kann das Trocknungsbett 3 beispielsweise als ein Lochblechboden oder ein Gitterrost ausgeführt sein, wobei die Dimensionierung und die Anzahl der Öffnungen der Konsistenz des Feuchtgutes 16 bzw. der gewünschten Luftdurchtrittsmenge angepaßt sind. Die Trocknungsluft wird dem Feuchtgut im wesentlichen über die gesamte Bodenfläche des Trocknungsbettes 3 zugeführt und durchströmt das Feuchtgut von unten nach oben. Dabei wird von der Trocknungsluft Feuchtigkeit aufgenommen und abtransportiert. Ein Teil der Trocknungsluft kann auch über die Oberfläche des Feuchtgutes 16 geleitet werden.

Um einen schnelleren Trocknungsvorgang zu erreichen, wird die verwendete Trocknungsluft erwärmt, wodurch auch deren relative Luftfeuchtigkeit verringert wird. Beim Niedertemperaturtrocknen reichen schon geringe Temperaturunterschiede zwischen der Trocknungsluft und der Umgebungsluft bzw. dem Feuchtgut 16 aus. Eine energiesparende Erwärmung der Trocknungsluft wird erfindungsgemäß durch die Nutzung der Wärme von Abwasser bzw. Restwasser erreicht. Die Wärme des Abwassers wird vorzugsweise über eine Wärmepumpe 7 gewonnen. Das Abwasser wird der Wärmepumpe 7 über eine Zuleitung 8 zugeführt und nach dem Wärmeentzug über eine Leitung 9 an entsprechenden Einrichtungen zur Wiederaufbereitung geleitet. Die Wärmepumpe 7 ist zum Erwärmen der Trocknungsluft mit den Zuleitungen 5, 6 für die Trocknungsluft verbunden.

Bei Abwässern mit hoher Temperatur, wie sie beispielsweise bei Industriekläranlagen anfallen, kann auch ein Wärmetauscher zum Erwärmen der Trocknungsluft verwendet werden, der anstatt der Wärmepumpe oder als Ergänzung eingebaut ist. Dabei können Wärmepumpen/Wärmetauscher 7 einzelnen Trocknungseinheiten 2 zugeordnet sein oder die Wärmegewinnung kann über eine zentrale Wärmepumpen/Wärmetauscher 7 erfolgen.

Wärmetauscher bzw. Wärmepumpen sind vorzugsweise im Nachklärbecken einer Kläranlage angeordnet. Dort steht relativ sauberes Wasser zur Verfügung und der Reinigungsprozeß wird nicht beeinflußt. Wärmetauscher bzw. Wärmepumpen können beispielsweise aber auch in der Ablaufleitung zum Vorfluter eingebaut sein. Neben der Verwendung von erwärmter Trocknungsluft kann zur Unterstützung des Trocknungsvorganges Sonnenstrahlung verwendet werden. Dazu ist das Gebäude bzw. die Umhüllung der erfindungsgemäßen Vorrichtung nach Art eines Gewächshauses gestaltet.

Mit der Misch- und Ausräumeinrichtung 10 wird das Feuchtgut 16 gemischt bzw. gewendet und von/zu den Trocknungseinheiten 2a, 2 bzw. zur Fördereinrichtung 13 transportiert. Die Misch- und Ausräumeinrichtung 10 trägt dazu bei, daß dem Feuchtgut möglichst viel Feuchte entzogen wird. Für eine schnelle Trocknung im Niedertemperaturbereich ist ein ausreichendes Wenden bzw. Mischen des Feuchtgutes, besonders zu Beginn der Trocknung, wichtig.

Die Misch- und Ausräumeinrichtung 10 ist im wesentlichen aus zwei um eine Achse rotierenden Halbschalen 11 aufgebaut. Durch Form und Drehung der Halbschalen 11 wird ein Mischen bzw. Wenden des Feuchtgutes 16 bewirkt. Außerdem ist die Misch- und Ausräumeinrichtung 10 entlang einer Führungsschiene 12 über die gesamte Länge der Trocknungseinheiten 2a, 2 bewegbar. Die Führungsschiene 12 kann je nach Breite der Misch- und Ausräumeinrichtung 10 ein- oder zweiseitig vorgesehen sein. Der Grad der Durchmischung kann durch Abstimmung der Drehzahl der Halbschalen 11 und der Vorschubgeschwindigkeit eingestellt werden.

Das Feuchtgut 16 kann auch auf der Stelle ohne Weitertransport gemischt werden. Dies hat den Vorteil, daß das Feuchtgut 16 bis zum Erreichen eines gewünschten Trocknungsgrades auf einer Trocknungseinheit 2 ohne Weiterbeförderung getrocknet werden kann. Unterschiedliche Arten von Schlamm bzw. Feuchtgut können so auf einzelnen Trocknungseinheiten 2 individuell getrocknet werden.

Durch die Abstimmung der Drehgeschwindigkeit der Halbschalen und der Vorschubgeschwindigkeit ist gewährleistet, daß das Feuchtgut 16 vor und nach dem Mischen auf dem Trocknungsbett 3 gleichmäßig und mit gleicher Schichthöhe verteilt ist. Dadurch wird über die gesamte Fläche des Trocknungsbettes 3 ein im wesentlichen gleicher Gegendruck zur Trocknungsluft aufgebaut.

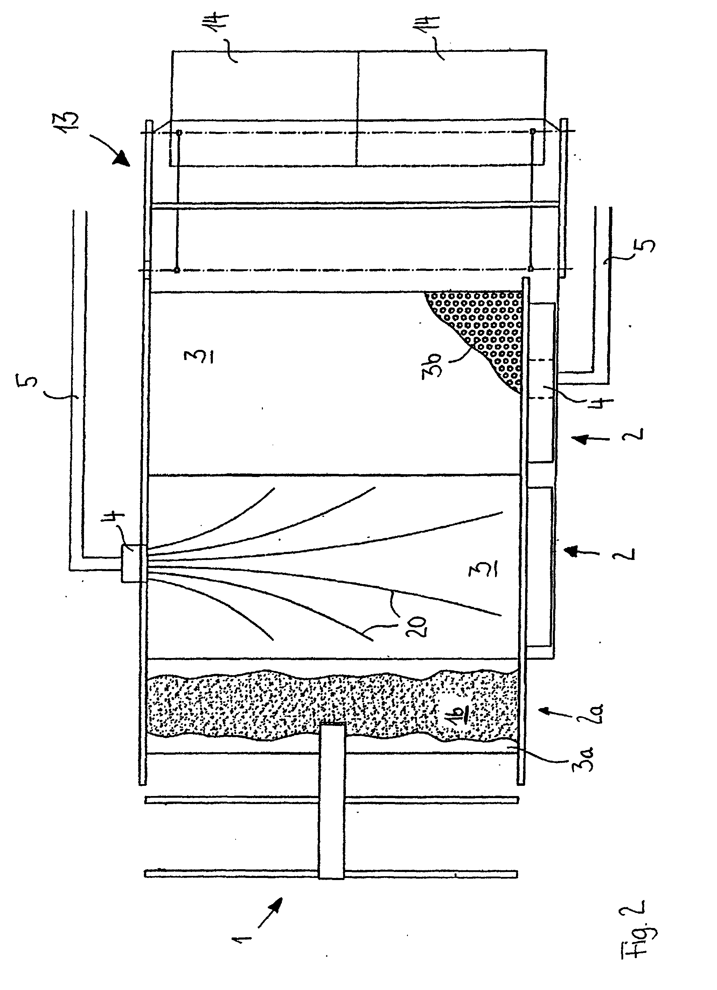

Zum Ausräumen wird die Drehung der Halbschalen 11 gestoppt und die Misch- und Ausräumeinrichtung 10 entlang der Führungsschiene 12 in Richtung der Fördereinrichtung 13 bewegt. Durch verschiedene Winkelstellungen der Halbschalen 11, können beliebig starke Oberflächenschichten bis zur maximalen Schichthöhe des Feuchtgutes 11 abgetragen werden. Bei Senkrechtstellung der Halbschalen wird der getrocknete Schlamm bzw. das getrocknete Feuchtgut 16 in einem Zug ausgeräumt. (Die vorstehend beschriebene Misch- und Ausräumeinrichtung ist in den Figuren 2 und 3 aus Gründen der Übersichtlichkeit nicht dargestellt.)

Figur 2 zeigt eine schematische Draufsicht auf die Ausführungsform der Erfindung der Figur 1. Die Gebläseeinrichtung 4 ist an jeder Trocknungseinheit 2 seitenversetzt angeordnet, um so eine optimale Durchlüftung des Feuchtgutes 16 zu gewährleisten und Todbereiche zu vermeiden. Die Gebläseeinrichtungen 4 blasen die Trocknungsluft von unten durch das luftdurchlässige Trocknungsbett 3 hindurch. Bezugszeichen 20 deutet schematisch die Luftströmung unter dem Trocknungsbett 3 an. Wie bereits vorstehend erwähnt, ist das Trocknungsbett 3 vorzugsweise als ein Lochblechboden ausgeführt. Zur Veranschaulichung ist ein Bereich 3b des Trockenbettes 3 schematisch als Lochblechboden dargestellt. Alternativ kann die Trocknungsluft mit Hilfe von Belüftungsrohren durch das Feuchtgut 16 hindurchgeleitet werden. Auf jeder einzelnen Trocknungseinheit 2 kann das Feuchtgut 16 unabhängig von den anderen Trocknungseinheiten 2 getrocknet werden. Dadurch können die einzelnen Trocknungseinheiten 2 in vorteilhafter Art und Weise je nach Menge des anfallenden Feuchtgutes betrieben werden.

Das Trocknungsbett 3 ist vorzugsweise derart dimensioniert, daß beim Trocknungsvorgang getrockneter Staub und Granulat durch dessen Öffnungen hindurchfallen kann. Dadurch wird der Trocknungsvorgang des Feuchtgutes günstig beeinflußt. Das durch das Trocknungsbett 3 hindurchfallende Trockengut wird in einer Kammer 19 (Figur 3) gesammelt.

Eine Querfördereinrichtung 15 ist zum Säubern der Kammer 19 und Abtransportieren des Trockengutes vorgesehen. Die Querfördereinrichtung 15 kann z.B. durch umlaufende Ketten mit Förderleisten und/oder Borsten realisiert sein.

Zum Abtransport des Trockengutes aus der Kammer 19 ist eine Längsfördereinrichtung 21 vorgesehen, mit der das Trockengut in den Container 14 transportiert wird. Dabei wird die Längsfördereinrichtung 21 durch die Querfördereinrichtung 15 beschickt. Bezugszeichen 22 bezeichnet ein Schließelement, das beispielsweise eine Klappe oder ein Schieber ist. Ein solches Schließelement 22 ist zweckmäßig, damit die Trocknungsluft im wesentlichen durch das Feuchtgut 16 hindurchgeleitet wird und nicht über die Seitenflächen entweicht.

Bezugszeichen 23 bezeichnet eine doppelwandige zeltartige Umhüllung. Durch die doppelwandige Ausführung wird eine bessere Isolierung gegenüber der Umgebung erreicht. Außenluft, die als Trocknungsluft verwendet werden soll, kann vorteilhaft in dem Bereich zwischen den Seitenwänden angesaugt werden. Zumindest Teile der Wände 23 können transparent sein, um eine Unterstützung des Trocknungsvorganges durch Sonnenstrahlung 24 zu ermöglichen. Ein Querlüfter 26 ist oberhalb der Trocknungseinheiten 3 angeordnet, um das Ableiten feuchter Luft nach außen zu unterstützen.

Die Sonnenstrahlung kann auch zum Erwärmen der Trocknungsluft verwendet werden. Dazu können Sonnenkollektoren vorgesehen sein, die die Trocknungsluft unmittelbar oder mittelbar über ein Heizmedium erwärmen. Zur weiteren Reduzierung der benötigten Energiemenge zum Aufwärmen der Trocknungsluft können neben der Sonnenstrahlung auch andere Energiequellen wie die Abwärme von Gebläsen, Gebläseräumen und Antriebsmotoren von Kläranlagen genutzt werden. Die Sonnenenergie kann auch in Warmwasserspeichern gespeichert werden, mit denen die Wärmetauscher/Wärmepumpen bei Bedarf, z.B. in der Nacht oder bei geringen Abwasseraufkommen, betrieben werden können. Die Erwärmung der Trocknungsluft unter Nutzung der Wärme von Abwasser in Kombination mit anderen günstigen Energiequellen wie Sonnenlicht oder der Abwärme von Antriebseinrichtungen führt zu einer besonders günstigen Energiebilanz bei unterschiedlichsten Wetterbedingungen.

## Patentansprüche

1. Verfahren zum Trocknen von Klärschlamm in einer Kläranlage, mit Trocknungsluft in mindestens einer Trocknungsstufe, bei dem die Trocknungsluft zum Trocknen des Feuchtgutes (16) erwärmt wird,
**dadurch gekennzeichnet,**
**daß** als Wärmequelle zum Erwärmen der Trocknungsluft Abwasser aus der Kläranlage verwendet wird.

2. Verfahren nach Anspruch 1, **dadurch gekennzeichnet, daß** die Wärme aus dem Abwasser mittels eines Wärmetauschers gewonnen wird.

3. Verfahren nach Anspruch 1 oder 2, **dadurch gekennzeichnet, daß** die Wärme aus dem Abwasser mittels einer Wärmepumpe (7) gewonnen wird.

4. Verfahren nach einem der Ansprüche 1 bis 3, **dadurch gekennzeichnet, daß** als Trocknungsluft Außenluft verwendet wird, wobei die Außenluft in Abhängigkeit von deren Temperatur und Feuchtegehalt erwärmt wird.

5. Verfahren nach einem der Ansprüche 1 bis 4, **dadurch gekennzeichnet, daß** zusätzlich Sonnenstrahlung (24) zum Trocknen des Feuchtgutes und/oder zum Erwärmen der Trocknungsluft verwendet wird.

6. Verfahren nach einem der Ansprüche 1 bis 5, **dadurch gekennzeichnet, daß** Wärme zum Erwärmen der Trocknungsluft in Form von Flüssigkeitswärme in Speichertanks gespeichert wird.

7. Verfahren nach einem der Ansprüche 1 bis 6, **dadurch gekennzeichnet, daß** die Trocknungsluft zum Trocknen des Feuchtgutes durch das Feuchtgut hindurchgeleitet wird.

8. Vorrichtung zum Trocknen von Klärschlamm in einer Kläranlage zum Durchführen des Verfahrens nach einem der Ansprüche 1 bis 7, umfassend mindestens eine Trocknungseinheit (2) mit einem Trocknungsbett (3) für den Klärschlamm (16) und einer Gebläseeinrichtung (4) für Trocknungsluft, **dadurch gekennzeichnet, daß** zum Erwärmen der Trocknungsluft Mittel (7) zum Gewinnen der Wärme aus dem Abwasser aus der Kläranlage vorgesehen sind.

9. Vorrichtung nach Anspruch 8, **dadurch gekennzeichnet, daß** das Mittel (7) zum Gewinnen der Wärme ein Wärmetauscher und/oder eine Wärmepumpe ist.

10. Vorrichtung nach einem der Ansprüche 8 bis 9, **dadurch gekennzeichnet, daß** das Trocknungsbett (3, 3a) ein Lochblechboden ist.

11. Vorrichtung nach Anspruch 10, **dadurch gekennzeichnet, daß** Mittel (15, 19, 21) zum Sammeln und Abtransport von getrocknetem Feuchtgut, das durch den Lochblechboden (3) fällt, vorgesehen sind.

12. Vorrichtung nach einem der Ansprüche 8 bis 11, **dadurch gekennzeichnet, daß** sie modulartig aus mehreren Trocknungseinheiten (2, 2a) aufgebaut ist.

13. Vorrichtung nach einem der Ansprüche 8 bis 12, **dadurch gekennzeichnet, daß** eine Misch- und Ausräumeinrichtung (10) zum Mischen und Transportieren des Feuchtgutes (16) vorgesehen ist.

14. Vorrichtung nach einem der Ansprüche 8 bis 13, **dadurch gekennzeichnet, daß** sie von einer doppelwandigen Umhüllung (23) umgeben ist.

15. Vorrichtung nach Anspruch 14, **dadurch gekennzeichnet, daß** die doppelwandige Umhüllung (23) zumindest teilweise transparent ausgebildet ist.

## Claims

1. Process for drying clarified sludge in a settling plant, with drying air in at least one drying stage, wherein the drying air is heated in order to dry the moist material (16), **characterised in that** waste water from the settling plant is used as the heat source for heating the drying air.

2. Process according to claim 1, **characterised in that** the heat is obtained from the waste water by means of a heat exchanger.

3. Process according to claim 1 or 2, **characterised in that** the heat is obtained from the waste water by means of a heat pump (7).

4. Process according to one of claims 1 to 3, **characterised in that** outside air is used as the drying air, the outside air being heated as a function of its temperature and moisture content.

5. Process according to one of claims 1 to 4, **characterised in that** solar radiation (24) is additionally used to dry the moist material and/or heat the drying air.

6. Process according to one of claims 1 to 5, **characterised in that** heat for heating the drying air is stored in storage tanks in the form of liquid heat.

7. Process according to one of claims 1 to 6, **characterised in that** the drying air for drying the moist material is passed through the moist material.

8. Apparatus for drying clarified sludge in a settling plant for carrying out the process according to one of claims 1 to 7, comprising at least one drying unit (2) with a drying bed (3) for the clarified sludge (16) and a blower device (4) for drying air, **characterised in that** in order to heat the drying air means (7) are provided for recovering heat from the waste water from the settling plant.

9. Apparatus according to claim 8, **characterised in that** the means (7) for recovering the heat consist of a heat exchanger and/or a heat pump.

10. Apparatus according to one of claims 8 to 9, **characterised in that** the drying bed (3, 3a) is a perforated sheet metal base.

11. Apparatus according to claim 10, **characterised in that** means (15, 19, 21) are provided for collecting and carrying away the dried moist material which falls through the perforated sheet metal base (3).

12. Apparatus according to one of claims 8 to 11, **characterised in that** it is of modular construction comprising a plurality of drying units (2, 2a).

13. Apparatus according to one of claims 8 to 12, **characterised in that** a mixing and removing device (10) is provided for mixing and transporting the moist material (16).

14. Apparatus according to one of claims 8 to 13, **characterised in that** it is surrounded by a double-walled casing (23).

15. Apparatus according to claim 14, **characterised in that** the double-walled casing (23) is constructed to be at least partially transparent.

## Revendications

1. Procédé de séchage de boues d'épuration dans une station d'épuration avec de l'air de séchage dans au moins un étage de séchage, dans lequel l'air de séchage est chauffé pour faire sécher les produits humides (16),**caractérisé en ce que** l'on utilise à titre de source de chaleur pour chauffer l'air de séchage les eaux d'évacuation de la station d'épuration.

2. Procédé selon la revendication 1, **caractérisé en ce que** l'on récupère la chaleur des eaux d'évacuation au moyen d'un échangeur de chaleur.

3. Procédé selon l'une ou l'autre des revendications 1 et 2, **caractérisé en ce que** l'on récupère la chaleur des eaux d'évacuation au moyen d'une pompe à chaleur (7).

4. Procédé selon l'une des revendications 1 à 3, **caractérisé en ce que** l'on utilise à titre d'air de séchage de l'air extérieur, l'air extérieur étant chauffé en fonction de sa température et de sa teneur en humidité.

5. Procédé selon l'une des revendications 1 à 4, **caractérisé en ce que** l'on utilise en supplément le rayonnement solaire (24) pour faire sécher les produits humides et/ou pour chauffer l'air de séchage.

6. Procédé selon l'une des revendications 1 à 5, **caractérisé en ce que** l'on accumule la chaleur pour chauffer l'air de séchage sous forme de chaleur contenue dans un liquide dans des réservoirs.

7. Procédé selon l'une des revendications 1 à 6, **caractérisé en ce que** l'on fait passer l'air de séchage pour sécher les produits humides à travers les produits humides.

8. Dispositif de séchage de boues d'épuration dans une station d'épuration pour mettre en oeuvre le procédé selon l'une des revendications 1 à 7, comportant au moins une unité de séchage (2) avec un lit de séchage (3) pour les boues d'épuration (16) et avec un système ventilateur (4) pour l'air de séchage, **caractérisé en ce que** pour chauffer l'air de séchage, il est prévu des moyens (7) pour récupérer la chaleur à partir des eaux d'évacuation de la station d'épuration.

9. Dispositif selon la revendication 8, **caractérisé en ce que** le moyen (7) pour récupérer la chaleur est un échangeur de chaleur et/ou une pompe à chaleur.

10. Dispositif selon l'une des revendications 8 et 9, **caractérisé en ce que** le lit de séchage (3, 3a) est un plancher en tôle perforée.

11. Dispositif selon la revendication 10, **caractérisé en ce qu'**il est prévu des moyens (15, 19, 21) pour collecter et évacuer les produits humides séchés qui tombent à travers le plancher en tôle perforée (3).

12. Dispositif selon l'une des revendications 8 à 11, **caractérisé en ce qu'**il est conçu sous forme modulaire à partir de plusieurs unités de séchage (2, 2a).

13. Dispositif selon l'une des revendications 8 à 12, **caractérisé en ce qu'**il est prévu une unité de mélange et de raclage (10) pour mélanger et transporter les produits humides (16).

14. Dispositif selon l'une des revendications 8 à 13, **caractérisé en ce qu'**il est entouré par une enveloppe (23) à double paroi.

15. Dispositif selon la revendication 14, **caractérisé en ce que** l'enveloppe (23) à double paroi est réalisée au moins partiellement transparente.
